# Europäisches Patentamt
## European Patent Office
## Office européen des brevets

(19)

(11) Publication number: **0 015 162**
**B1**

(12)

# EUROPEAN PATENT SPECIFICATION

(45) Date of publication of patent specification: **31.08.83**

(51) Int. Cl.³: **F 23 D 15/00**

(21) Application number: **80300578.4**

(22) Date of filing: **27.02.80**

(54) Oxy-fuel burner.

| | |
|---|---|
| (30) Priority: **27.02.79 GB 7906785** | (73) Proprietor: **AIR PRODUCTS AND CHEMICALS, INC.**<br>**P.O. Box 538**<br>**Allentown, Pennsylvania 18105 (US)** |
| (43) Date of publication of application:<br>**03.09.80 Bulletin 80/18** | |
| | (72) Inventor: **Shepherd, Norris Wilfred**<br>**3 Alderson Road**<br>**Sparken Hill Worksop, Nottinghamshire (GB)** |
| (45) Publication of the grant of the patent:<br>**31.08.83 Bulletin 83/35** | |
| (84) Designated Contracting States:<br>**AT BE CH DE FR IT LU NL SE** | (74) Representative: **Lucas, Brian Ronald**<br>**c/o Air Products Limited Hersham Place Molesey Road**<br>**Walton-on-Thames Surrey, KT12 4RZ (GB)** |
| (56) References cited:<br>**BE - A - 686 168**<br>**BE - A - 703 523**<br>**DE - A - 1 960 754**<br>**DE - A - 2 106 448**<br>**FR - A - 1 282 150**<br>**FR - A - 2 093 258**<br>**FR - A - 2 332 493**<br>**GB - A - 1 055 585**<br>**US - A - 3 224 679**<br>**US - A - 3 563 683** | |

Courier Press, Leamington Spa, England

Oxy-fuel burner.

This invention relates to oxy-fuel burners (hereinafter referred to as "burners").

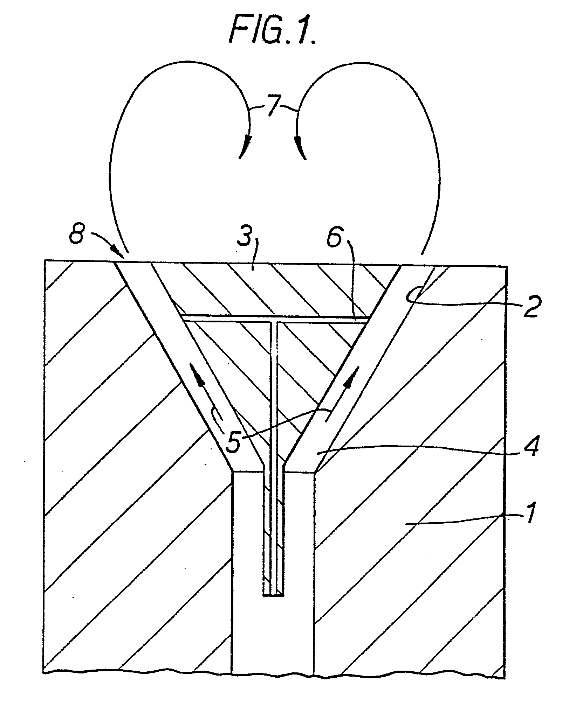

One of the most successful burners produced in recent times is diagramatically shown , in cross-section, in Figure 1 of the accompanying drawings. This burner, which is commonly known as a torroidal burner, comprises a barrel 1 having a conical opening 2. A cone 3 is mounted in the conical opening as shown and defines one wall of a conical passageway 4 extending between the cone 3 and the conical opening 2. In use, oxygen is passed through the conical passageway 4 in the direction of the arrows 5. At the same time fuel ,for example natural gas or oil, is introduced into the passageway 4 through an annulus 6 cut in the periphery of the cone 3 as shown. The resulting mixture leaves the conical passageway 4 through annular outlet 8 and is ignited. Because of the geometry of the burner, the mixture passing through annular outlet 8 tends to flow in the direction indicated by the arrows 7 which causes the burning mixture to adopt a very distinctive torroidal shape. This type of burner has two major advantages, viz

1. it can be fired over a very large range of heat outputs since the higher the flow through the passageway 4 the more the torroidal flow pattern tends to move towards the cone, thereby inhibiting flame lift off; and

2. the flame is very broad compared with most burners. This second advantage is particularly important where the burner is being fired on a mixture of oxygen and fuel since such flames tend to be very narrow.

Despite its advantages the torroidal burner has several disadvantages. One is that the minimum pressure in the passageway 4 must be about 12.5 psig in order for the torroidal flow pattern to form efficiently. This means that the fuel in annulus 6 must be raised to just above 12.5 psig before it can be injected into passageway 4. Whilst this does not create any problems for liquid fuels, for example oils, a large and expensive compressor is needed when the fuel is natural gas which, with few exceptions, is generally only available at low pressure i.e. 8 to 10 inches water gauge (i.e. approximately $\frac{1}{3}$ psig).

Many attempts have been made to operate torroidal burners with low pressure natural gas but, to our knowledge, all such attempts have not proven commercially successful. Thus in French Patent Specification No. 1,282,150 there is disclosed a burner comprising a barrel with a conical opening, a cone disposed in said conical opening and defining one wall of a conical passageway extending between the cone and the conical opening and at least one fuel supply port disposed radially outwardly from the outlet of the conical passageway. In use air leaving the outlet entrains fuel from the fuel supply port and forms a torroidal flame downstream of the cone. In practice this burner did not gain commercial acceptance because, despite the powerful torroidal mixing effect, part of the fuel did not become entrained in the torroid. As can be seen from the drawings accompanying French Patent Specification No. 1,282,150 the fuel is introduced through fuel supply ports which are inclined away from the longitudinal axis of the burner downstream of the cone. This approach is quite logical as it creates minimal disturbance to the formation of the torroid and envisages that the fuel will be drawn towards the sides of the torroid and mixed with the air as the air stream turns back towards the cone. A similar idea is shown in DE—A—2,106,448. In a number of similar burners fuel has been used to warm the torroid and air has been introduced around the outside of the torroid parallel to the longitudinal axis of the burner. In these cases it has been found necessary to introduce slightly more air than required for stoichometric combustion to ensure proper mixing in the torroid and this reduces the maximum temperature which would otherwise be obtainable by the burner.

Contrary to all prior torroidal burners we form the torroid from oxygen and direct the fuel towards the longitudinal axis of the burner downstream of the cone.

Accordingly the present invention provides a burner comprising a barrel having a conical opening and defining one wall of a conical passageway extending between said cone and said conical opening, and at least one fuel supply port disposed radially outwardly from the outlet of said conical passageway, the arrangement being such that, in use, oxygen leaving said outlet entrains fuel from said fuel supply port and forms a torroidal flame downstream of said cone characterized in that said fuel supply port communicates with a passage which is inclined towards the longitudinal axis of said burner downstream of said cone.

If desired, the burner may also include an air supply port situated radially outwardly of the outlet of the conical passageway. Such air supply port may be situated radially inwardly or outwardly of the fuel supply port. Alternatively, the air supply port and the fuel supply port may be located equidistant from the longitudinal axis of the burner.

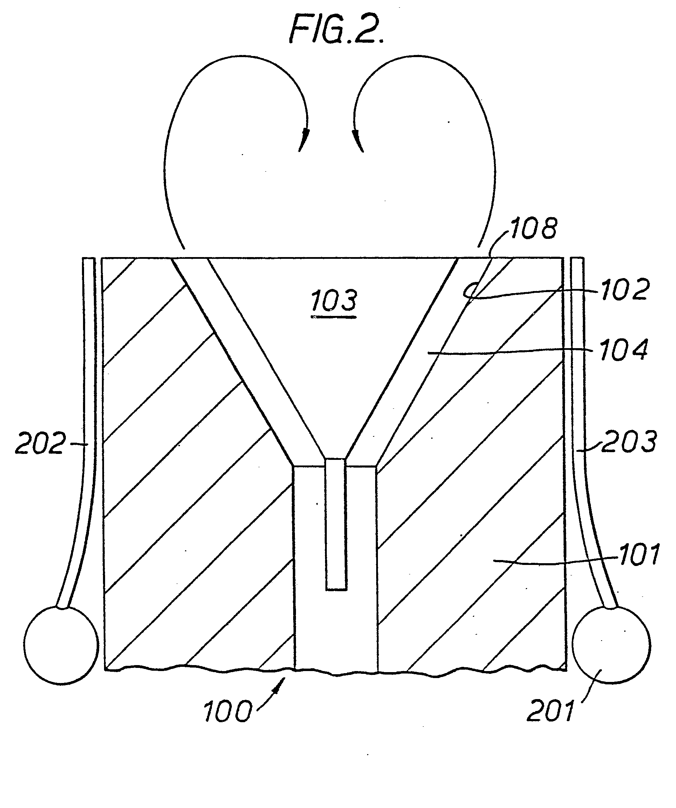

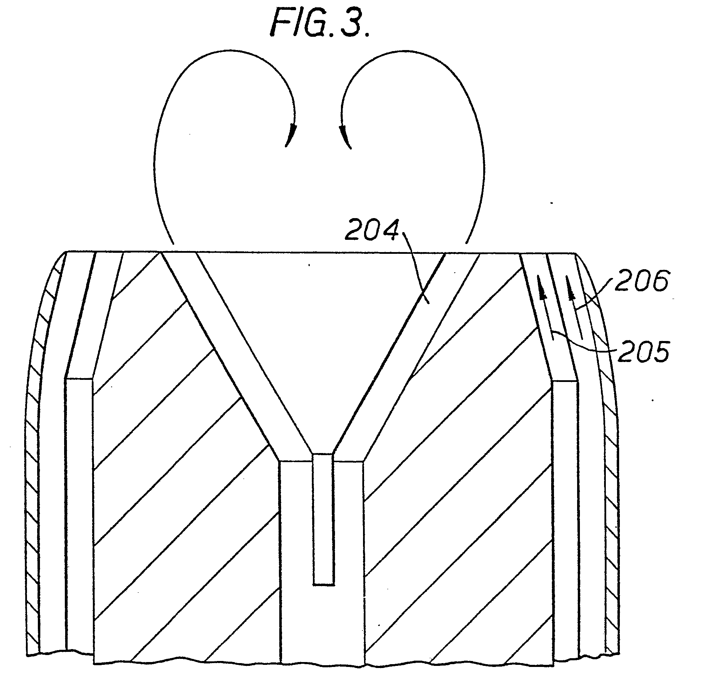

For a better understanding of the invention reference will now be made to Figures 2 and 3 of the accompanying drawings, in which:

Figure 2 is a schematic cross-section through a trial burner which is essentially known from the FR—A—1 282 150; and

Figure 3 is a schematic cross-section through a burner in accordance with the present invention.

Referring to the drawings, Figure 2 is a schematic cross-section through our first trial burner. The burner, which is generally identified by reference numeral 100 comprises a barrel 101 having a conical opening 102. A cone 103 is mounted in the conical opening 102 and defines one wall of a conical passageway 104 which extends between the cone 103 and the conical opening 102. The barrel 101 and cone 103 form part of a "mini" torroidal burner having an outer diameter of 1.5 inches.

An annular gas header 201 is mounted around the barrel 101 and is connected to six $\frac{3}{8}$ inch internal diameter copper pipes which extend from the annular gas header 201 to the tip of the barrel 101 and are spaced equidistant therearound. Only two of these copper pipes are shown in Figure 2 and are identified by reference numerals 202 and 203.

In order to start the burner, natural gas was introduced into the annular gas header 201 at 8 inches water gauge and was ignited as it left the copper pipes. The resulting flame was about 3 feet long and yellow. Oxygen was then introduced through the passageway 104 and left the burner through annular outlet 108. The flame shorted, became blue, and assumed the characteristic torroidal shape associated with torroidal burners. It was estimated that the burner 100 was firing at 1,000,000 BTU per hour.

Figure 3 shows a modified form of the burner shown in Figure 2. In particular, in addition to supplying oxygen through conical passageway 204, air at 28 inches water gauge is introduced through passage 205 and natural gas at 8 inches water gauge through passage 206. It will be noted that the outlets of passages 205 and 206 are annular slots and the passages themselves are, adjacent their outlets, inclined towards the longitudinal axis of the burner downstream of the cone.

Slightly less oxygen was required to produce the required flame on the burner shown in Figure 3 and it was concluded that this was because of better mixing characteristics.

It will be appreciated that provision should be made for water cooling the burners although this has not been shown in the figures. In addition, whilst the present invention is mainly intended for burners using gaseous fuels it would also be suitable for use with liquid fuels, for example oil.

If desired, the burner could be operated by directing compressed air through the passageway between the cone and the conical opening rather than by using oxygen.

## Claims

1. A burner comprising a barrel having a conical opening, a cone disposed in said conical opening and defining one wall of a conical passageway (204) extending between said cone and said conical opening, and at least one fuel supply port disposed radially outwardly from the outlet of said conical passageway, the arrangement being such that, in use, oxygen leaving said outlet entrains fuel from said fuel supply port and forms a torroidal flame downstream of said cone characterized in that said fuel supply port communicates with a passage (205) which is inclined towards the longitudinal axis of said burner downstream of said cone.

2. A burner according to Claim 1, characterized in that it includes an air supply port (206) situated radially outwardly from the outlet of said conical passageway.

## Revendications

1. Brûleur comprenant un corps cylindrique muni d'une ouverture conique, un cône disposé dans l'ouverture conique et définissant une paroi d'un passage conique (204) s'étendant entre ledit cône et ladite ouverture conique, et au moins un orifice d'alimentation de combustible disposé radialement vers l'extérieur par rapport à la sortie dudit passage conique, la disposition étant telle qu'en utilisation l'oxygène qui quitte ladite sortie entraîne le combustible provenant dudit orifice d'alimentation de combustible et forme une flame toroïdale à l'aval dudit cône, caractérisé en ce que ledit orifice d'alimentation de combustible communique avec un passage (205) qui est incliné en direction de l'axe longitudinal dudit brûleur à l'aval dudit cône.

2. Brûleur selon la revendication 1, caractérisé en ce qu'il comprend un orifice d'alimentation d'air (206) situé radialement à l'extérieur de la sortie dudit passage conique.

## Patentansprüche

1. Brenner mit einer Trommel, die eine konische Öffnung aufweist, wobei ein Kegel in der konischen Öffnung angeordnet ist und eine Wand eines konischen Kanals (204) begrenzt, der sich zwischen dem Kegel und der konischen Öffnung erstreckt, und mindestens eine Treibstoff-Einspeisungsöffnung, die radial außerhalb des Auslasses des konischen Kanals angeordnet ist, wobei die Anordnung derart vorgenommen ist, daß bei der Verwendung sauerstoff, der den Auslaß verläßt, Treibstoff aus der Treibstoff-Einspeisungsöffnung mitreißt und eine kreisringförmige Flamme stromabwärts vom Kegel bildet, dadurch gekennzeichnet, daß die Treibstoff-Einspeisungsöffnung mit einem Kanal (205) in Verbindung steht, welcher zur Längsachse des Brenners stromabwärts vom Kegel hingeneigt ist.

2. Brenner nach Anspruch 1, dadurch gekennzeichnet, daß er eine Luft-Einspeisungsöffnung (206) aufweist, welche radial außerhalb des Auslasses des konischen Kanales angeordnet ist.

# FIG.1.

# FIG.2.

# FIG. 3.

204

206

205